(19) Europäisches Patentamt

European Patent Office

Office européen des brevets

(11) **EP 1 176 323 B1**

(12) **EUROPEAN PATENT SPECIFICATION**

(45) Date of publication and mention
of the grant of the patent:
**22.09.2004 Bulletin 2004/39**

(51) Int Cl.$^7$: **F16C 19/02**, F16D 27/112

(21) Application number: **01306466.2**

(22) Date of filing: **27.07.2001**

(54) **Bearing, electromagnetic clutch and gas compressor**

Kugellager, Elektromagnetische Kupplung und Gasverdichter

Roulement à billes, embrayage électromagnetique et compresseur à gaz

(84) Designated Contracting States:
**DE FR GB**

(30) Priority: **28.07.2000 JP 2000228965**
**29.06.2001 JP 2001199594**

(43) Date of publication of application:
**30.01.2002 Bulletin 2002/05**

(73) Proprietor: **Calsonic Compressor Manufacturing Inc.**
**Narashino-shi, Chiba 275-004 (JP)**

(72) Inventor: **Takatsu, Hidehisa**
**Mihama-ku, Chiba-shi, Chiba (JP)**

(74) Representative: **Sorenti, Gino et al**
**Miller Sturt Kenyon,**
**9 John Street**
**London WC1N 2ES (GB)**

(56) References cited:
**DE-A- 19 831 792**     **DE-A- 19 962 191**
**US-A- 1 394 110**     **US-A- 3 292 980**
**US-A- 4 425 520**     **US-A- 4 645 435**

• **PATENT ABSTRACTS OF JAPAN vol. 2000, no. 09, 13 October 2000 (2000-10-13) & JP 2000 170753 A (NTN CORP), 20 June 2000 (2000-06-20)**

**Description**

The present invention relates to a rotary vane type gas compressor mounted with an electromagnetic clutch. Such a compressor is known from DE-A-198 31 792.

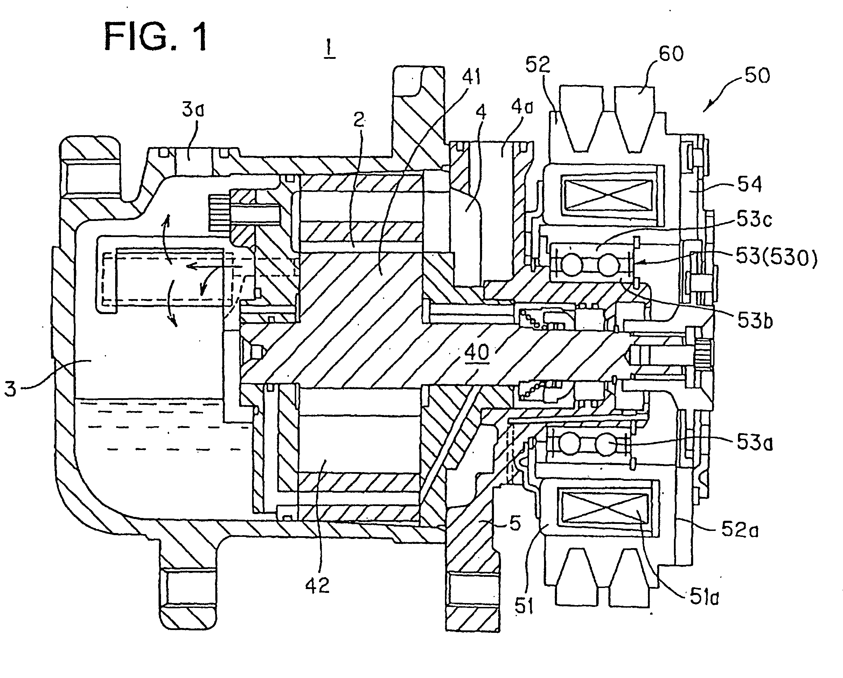

In a vane-type gas compressor used for a car air conditioner or the like, a rotary power is transmitted from an engine-crankshaft pulley to a rotor shaft 40 through a belt 60 and electromagnetic clutch 50 as shown in Fig. 1.

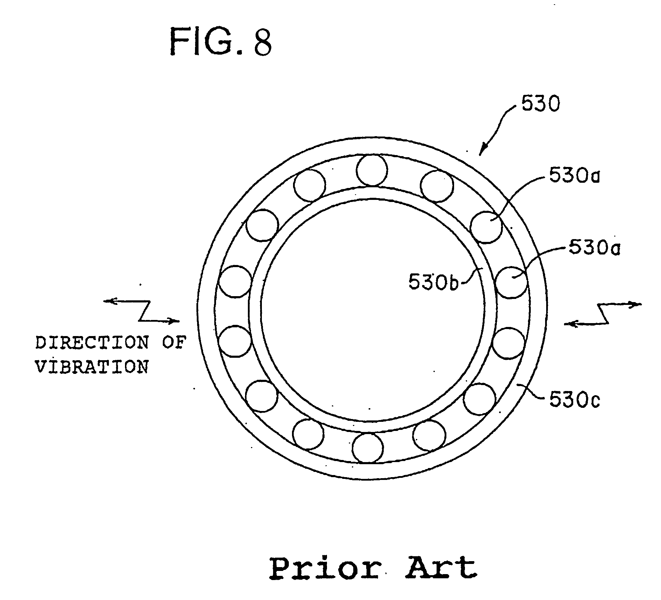

The electromagnetic clutch 50 has a ring-formed electromagnet 51, a prime-mover pulley 52 for passing the magnetic flux of the electromagnet 51, a plurality of rows of ball bearing 530 (see Fig. 8) for rotatably, coaxially holding the prime-mover pulley 52 to the electromagnet 51, and a follower armature plate 54 to be adsorbed to an end surface 52a of the prime-mover pulley 52 by the magnetic flux.

During engine rotation, the prime-mover pulley 52 and the ball bearing 530 holding the same are rotatively driven at all times by a belt 60.

When operating the gas compressor 1, the electromagnet 51 of the electromagnetic clutch 50 is energized to attract the follower armature plate 54 to an end surface 52a of the prime-mover pulley 52 and join the prime-mover pulley 52 and the rotor shaft 40, thereby rotating the rotor shaft 40.

The ball bearing 530 of the electromagnetic clutch 50 conventionally has used one having an even number of balls 530a per row, e.g. fourteen as shown in Fig. 10. Generally, the ball bearing causes vibration and noise due to rotation. In the case of the ball bearing 530 rotating while undergoing a radial load due to a tension of the belt 60, considerable vibration and noise occur. Particularly when other vibration and noise levels are lowered during engine idling, the vibration and noise of the ball bearing 530 transmitted to the vehicular compartment is not negligible.

US 4425520 describes an electromagnetic clutch assembly of this type.

The inventor has conducted various experiments and pinpointed that the one factor of high vibration and noise level is an even number of balls of the ball bearing. In the ball bearing 530 having an even number of balls 530a per row, the balls 530a, 530a....are in a facing relationship to have linear-symmetry arrangement between the inner race 530b and the outer race 530c. The deformation and vibration at a regular particular frequency is caused in the inner and outer races. It is to be considered that the vibration as a source also increases noise.

US 3392980 discloses a rolling bearing assembly which is constructed so as to reduce vibration arising from ball and raceway waviness and raceway out of round. The bearing is constructed so that the ratio of the outer ring thickness to the difference between the outer diameter of the outer ring and the bore diameter of the inner ring is equal to or greater than 0.5, and if the product of the ratio of the outer diameter of the outer ring less the bore diameter of the inner ring to the sum of the outer diameter of the outer ring and the bore diameter of the inner ring and the number of balls is equal to or greater than 5.

This invention is to solve the foregoing problem and provide a rotary vane type compressor having an electromagnetic clutch and which is low in vibration and noise resulting from the ball bearing used for supporting the electromagnetic clutch.

In order to solve the above problem, the present invention provides a rotary vane type gas compressor comprising:

an electromagnetic clutch having

an electromagnet in a ring form,
a prime-mover pulley for passing magnetic flux of the electromagnet,
a ball bearing for rotatably supporting the prime-mover pulley coaxially to the electromagnet, and
a follower armature plate to be attracted to an end surface of the prime-mover pulley by the magnetic flux; and

a rotor shaft for transmitting a rotary power for compressing a gas through the electromagnetic clutch; characterised in that:
the ball bearing comprises an odd number of balls per row.

By providing a ball bearing with an odd number of balls, the balls are not arranged in a facing relationship. The deformation in the inner and outer races of the ball bearing rotating while undergoing a radial load is made irregular and complicated, eliminating the deformation and vibration at a regular predetermined frequency and lowering the level of vibration and noise.

Embodiments of the present invention will now be described by way of further example only and with reference to the accompanying drawings, in which:-

Fig. 1 is a longitudinal section view showing an embodiment of this invention.
Fig. 2 is a front view showing a ball bearing of the gas compressor of Fig. 1.

Fig. 3 is a explanatory view showing an empirical value of a relationship between the number of balls of the ball bearing and noise/vibration.

Fig. 4A is a plan view and Fig. 4B is a side view showing a noise measuring position of a present invention product and a conventional product in an actual vehicle.

Fig. 5A is a plan view and Fig. 5B is a side view showing an installation point of vibrometers for a present invention product and a conventional product in the actual vehicle.

Figs. 6A and 6B are a graph showing, by comparison, noise levels of the present invention product and the conventional product.

Figs. 7A and 7B are a graph showing, by comparison, vibration levels of the present invention product and the conventional product.

Fig. 8 is a front view of the related art ball bearing used in a gas compressor.

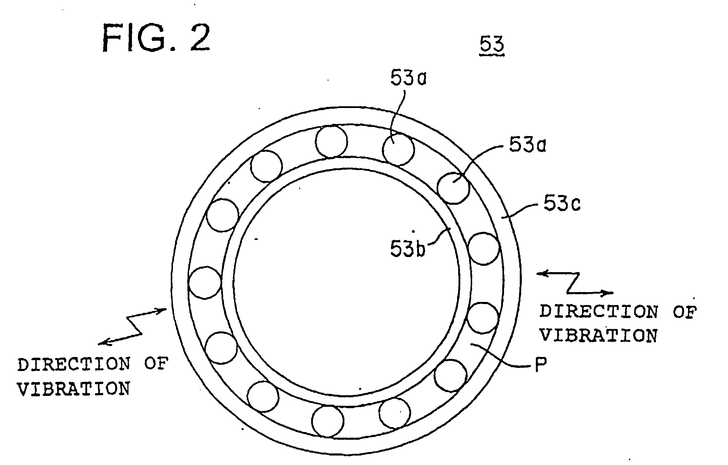

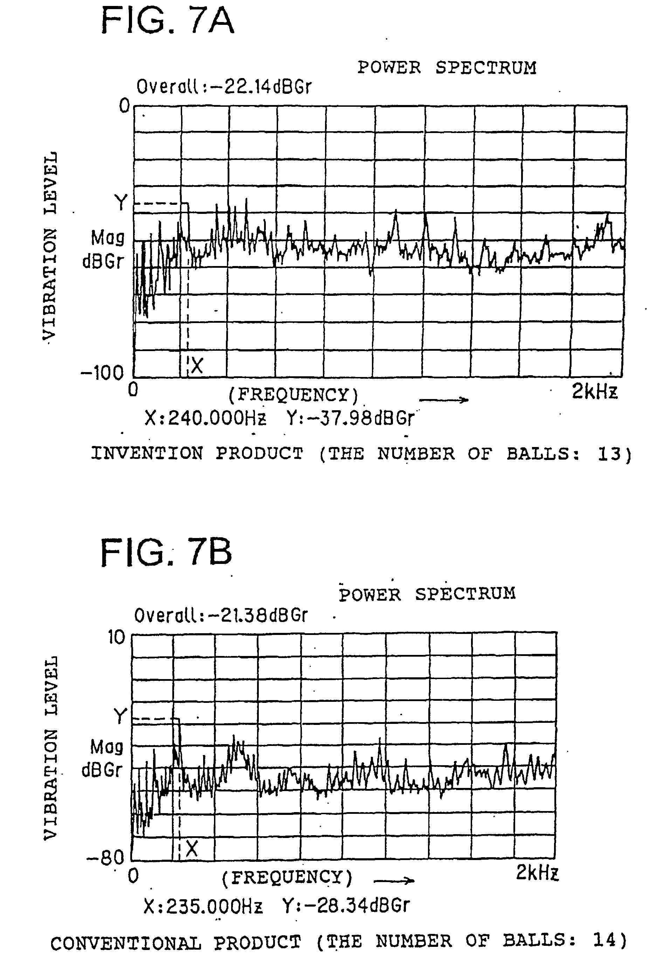

An embodiment of this invention will be explained below with reference to Fig. 1 to Figs. 7A and 7B. Fig. 1 is a lengthwise sectional view showing an embodiment of this invention, and Fig. 2 is a front view showing a ball bearing of a gas compressor of Fig. 1.

In Fig. 1, the gas compressor 1 is provided with an electromagnetic clutch 50. The electromagnetic clutch 50 is transmitted with a drive force for rotation from an engine crankshaft through a belt 60 wound over a prime-mover pulley 52 on a prime-mover side thereof.

When the electromagnetic clutch 50 is excited, a follower armature plate 54 on a follower side coupled to the rotor shaft 40 is adsorbed to and integrated with an end surface 52a of the prime-mover pulley 52, to transmit a rotary power to the rotor shaft 40. This rotates, in a cylinder chamber 2, the rotor 41 integrated with the rotor shaft 40 and the vanes 42 sliding in radial grooves of the rotor 41 to compress the gas within the cylinder 2.

Incidentally, the compressed gas is discharged to a discharge chamber 3 where it is delivered through a discharge port 3a to a piping system such as a car air conditioner, not shown, and returned through a suction port 4a to a suction chamber 4, again being taken into the cylinder chamber 2.

In the electromagnetic clutch 50, an electromagnet 51 is provided in a ring form fixed on a front cover (frame) 5 of the gas compressor 1. When the coil 51a of the electromagnet 51 is energized, the electromagnet clutch 50 is excited. The magnetic flux of the electromagnet 51 passes through an inside of the prime-mover pulley 52, to attract the follower armature plate 54 onto the end surface 52a of the prime-mover pulley 52.

The prime-mover pulley 52 is rotatably held coaxially to the electromagnet 51 on the frame 5 of the gas compressor 1, through a plurality of rows of ball bearings 53. More specifically, the inner race 53b of the ball bearing 53 is attached on the frame 5 of the gas compressor 1, and the outer race 53c holds the prime-mover pulley 52. That is, an outer-race-rotating assembling structure is provided by assembling the inner race 53b on the side of a non-rotatable stator and the outer race 53c on the side of a rotatable rotor. This ball bearing 53 is acted upon with, in addition to the load due to the weight of the prime-mover pulley 52, rotating vibration and the like, a further greater load in a radial direction due to tension, vibration and the like of the belt 60.

The foregoing structure and operation is similar to the gas compressor using an electromagnetic clutch. Next, the featured parts of this invention are explained.

The ball bearing 53 has, as shown in Fig. 2, balls 53a in an odd number of balls per row, thirteen in this embodiment, arranged nearly equally spaced on a pitch circle p through a retainer (not shown) between the inner race 53b and the outer race 53c.

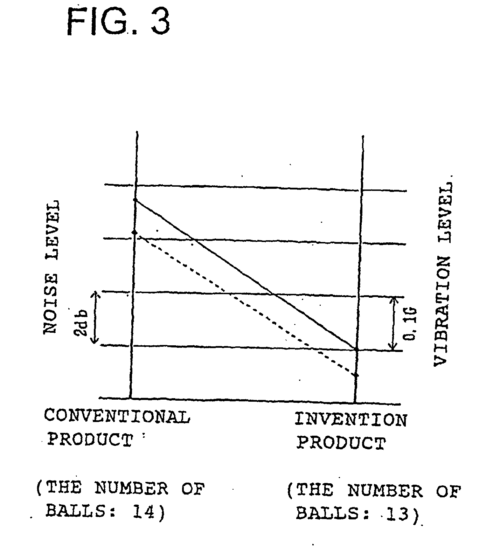

Fig. 3 shows a result of comparison between the vibration and noise on the gas compressor of the invention and the vibration and noise on a conventional gas compressor. In Fig. 3, the invention product is a gas compressor of the invention using the ball bearing 53 having an odd number of balls (thirteen) shown in Fig. 2 on the electromagnetic clutch 50 while the conventional product is a conventional gas compressor using a ball bearing 530 having an even number of balls (fourteen) shown in Fig. 10 on the electromagnetic clutch 50.

The data in Fig. 3 shows respective average values of vibration and noise measured under the same condition on each of five sets manufactured for the invention product and the conventional product.

As shown in Fig. 3, a ball bearing 53 of the invention having an odd number of balls, has a noise level which is lower by a little over 5 dB and a vibration level which is lower by a little over 0.2G, as compared to the case of a conventional ball bearing 530 having an even number of balls.

Next, the invention product and the conventional product were respectively mounted on actual vehicles, and a noise measurement test and a vibration measurement test were conducted. The measuring conditions in the measurement tests are as follows:

ambient temperature of 30°C
vehicle halt state (idling state)
engine rotational speed Ne = 1100 rpm (compressor rotation speed Nc = 1400 rpm)

air conditioner in ON (compressor clutch ON) state.

Incidentally, the invention product is a gas compressor of the invention using the ball bearing 53 having an odd number (thirteen) of balls shown in Fig. 2 on the electromagnetic clutch 50 while the conventional product is a conventional gas compressor using the ball bearing 530 having an even number (fourteen) of balls shown in Fig. 10 on the electromagnetic clutch 50.

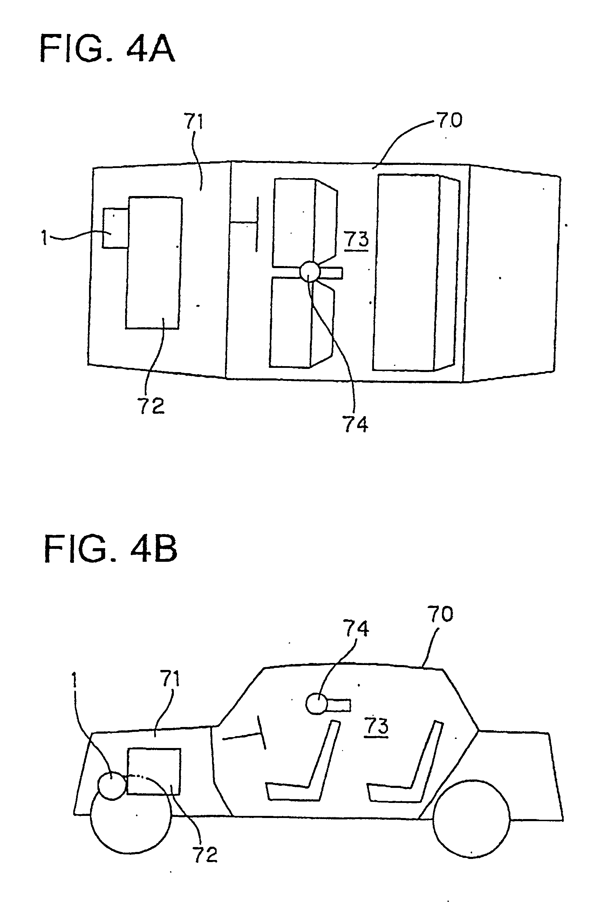

The noise measuring position is as shown in Figs. 4A and 4B, wherein the gas compressor 1 is mounted on an engine 72 in an engine room 71 of the vehicle 70 and a microphone (noise meter) 74 for measuring noise is installed in a vehicular chamber 73.

This microphone 74 is set up in a central position of the front seats, i.e. at an intermediate position between the driver's seat and the assistant driver's seat, at a height approximately equal to the ear height of a typical driver.

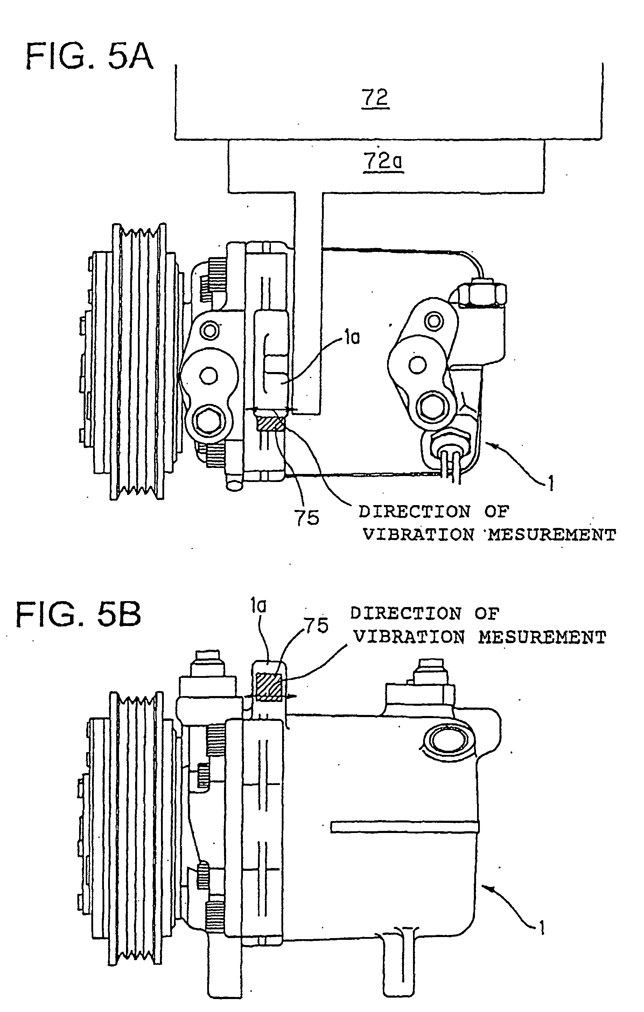

The vibration measuring position is as shown in Figs. 5A and 5B, in which the gas compressor is mounted on the engine 72 through a compressor-mounting bracket 72a, and an acceleration pickup (vibrometer) 75 is mounted on a casing flange 1a of the gas compressor 1. The direction of vibration measurement is set in a front-and-rear direction of the gas compressor 1, as shown by the arrow in Fig. 5A.

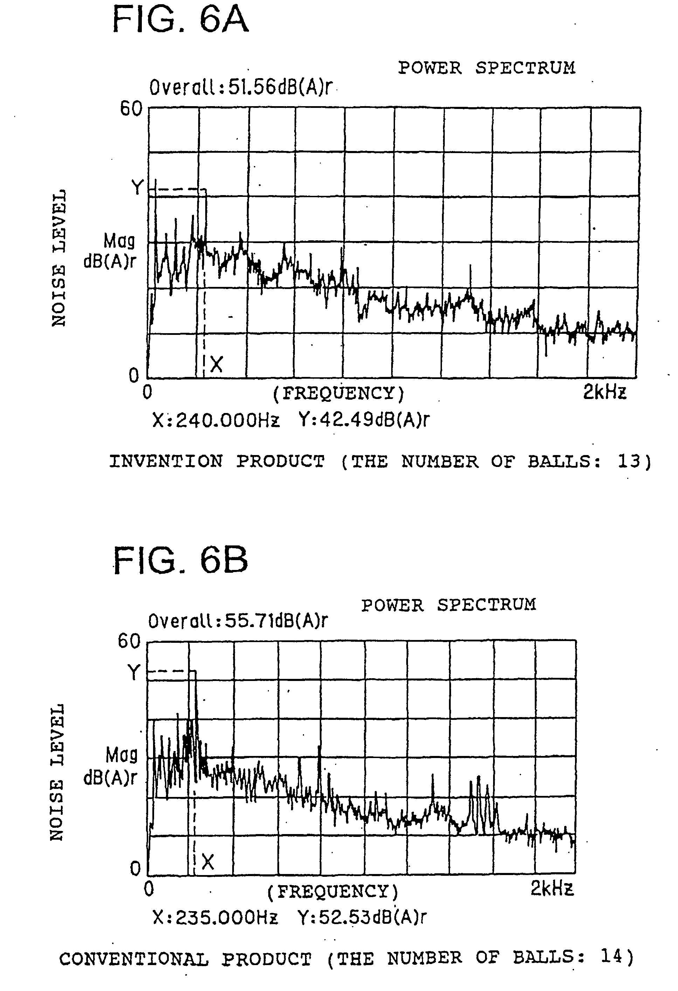

Then, frequency analysis (FFT analysis) is conducted. The result of noise measurement is shown for the invention product in the graph of Fig. 6A and that for the conventional product in the graph of Fig. 6B (frequency on the horizontal axis, noise level on the vertical axis).

The result of vibration measurement by the vibrometer 75 mounted on the gas compressor 1 is shown for the invention product in the graph of Fig. 7A and that for the conventional product in the graph of Fig. 7B (frequency on the horizontal axis, vibration level on the vertical axis).

Accordingly, as is apparent from a comparison between the graphs of Figs 6A and 6B concerning the noise measurement result for the present product and the conventional product, the noise level of the conventional product at a frequency of 240 Hz, which is a conspicuous noise frequency, is 52.53 dB, whereas the noise level of the present invention product is 42.49 dB. It can be understood that the noise level decreases by about 10 dB.

Meanwhile, comparing the vibration measurement results shown in Figs 7A and 7B, the vibration level of the present invention product is -37.98 dB = 0.13G as compared to the vibration level of the conventional product of -28.34 dB = 0.38G. It can be understood that vibration is decreased by 0.2G or greater. Incidentally, vibration is calculated as 0 dB = 10G by the use of the following calculation formula.

$$y[dB]=20\log\frac{\chi[G]}{10[G]} \Rightarrow \chi[G] = 10[G] \times 10^{\frac{y[dB]}{20}} = 10^{\frac{y[dB]}{20}+1} \tag{1}$$

Meanwhile, since the sound at about 240 Hz has been conspicuously heard in the vehicular compartment, the other frequencies of sound are considered to be negligible.

In this manner, the following can be considered as the reason why the noise/vibration level can be reduced between the present invention and the conventional product.

In the ball bearing 53 of this invention, the odd number of balls 53a, 53a, ... are not arranged facing to each other and the deformations of the inner race 53b, outer race 53c of the ball bearing 53 are irregular and of complicated form. The deformation/vibration at a regular particular frequency is eliminated to decrease the vibration/noise level. On the contrary, in the conventional ball bearing 530, the even number of balls 530, 530a, ... face to each other and are arranged in a linear symmetry. The deformation/vibration at a regular particular frequency is caused in the inner race 530b, outer race 530c so that a high vibration/noise level is generated.

It is needless to say that the ball bearings used in the invention have the similar operation/working effect if used in a single-row type ball bearing and hence is not limited to use in a plurality-of-row type ball bearing.

As explained in detail above, in this invention, because the number of balls per row of the ball bearing for the electromagnetic clutch is selected to be an odd number, the ball bearing, when in rotation, gives rise to reduced levels of vibration and noise, in comparison to known arrangements.

The aforegoing description has been given by way of example only and it will be appreciated by a person skilled in the art that modifications can be made without departing from the scope of the present invention.

**Claims**

**1.** A rotary vane type gas compressor (1), comprising:

an electromagnetic clutch (50) having

an electromagnet (51) in a ring form,
a prime-mover pulley (52) for passing magnet flux of the electromagnet (51),
a ball bearing (53) for rotatably supporting the prime-mover pulley coaxially to the electromagnet (51), and
a follower armature plate (54) to be attracted to an end surface of the prime-mover pulley (52) by the magnetic flux; and

a rotor shaft (40) for transmitting a rotary power for compressing a gas through the electromagnetic clutch (50); **characterised in that**:
the ball bearing (53) comprises an odd number of balls per row.

## Patentansprüche

1. Gaskompressor vom Drehflügeltyp (1), umfassend:

eine elektromagnetische Kupplung (50) mit einem Elektromagneten (51) in einer Ringform, einer Primärantriebsriemenscheibe (52) zum Leiten eines Magnetflusses des Elektromagneten (51), einem Kugellager (53) zum drehbaren Lagern der Primärantriebsriemenscheibe koaxial zu dem Elektromagneten (51), und einer Folgerankerplatte (54), die durch den Magnetfluss zu einer Endfläche der Primärantriebsriemenscheibe (52) hin anzuziehen ist; und

eine Rotorwelle (40) zum Übertragen einer Drehkraft zum Komprimieren von Gas durch die elektromagnetische Kupplung (50); **dadurch gekennzeichnet dass**:

das Kugellager (53) eine ungerade Anzahl von Kugeln pro Reihe aufweist.

## Revendications

1. Compresseur à palettes rotatives (1), comprenant :

un embrayage électromagnétique (50) ayant
un électro-aimant (51) en forme d'anneau,

une poulie de moteur premier (52) pour transmettre le flux magnétique de l'électro-aimant (51),
un roulement à billes (53) pour supporter de façon rotative la poulie de moteur premier de façon coaxiale par rapport à l'électro-aimant (51), et
une plaque d'armature suiveuse (54) destinée à être attirée vers une surface d'extrémité de la poulie de moteur premier (52) par le flux magnétique ; et

un arbre rotor (40) pour transmettre une puissance rotative pour comprimer un gaz par l'intermédiaire de l'embrayage électromagnétique (50) ; **caractérisé en ce que** :
le roulement à billes (53) comprend un nombre impair de billes par rangée.

# FIG. 1

EP 1 176 323 B1

# FIG. 2

# FIG. 3

NOISE LEVEL

VIBRATION LEVEL

2db

0.1G

CONVENTIONAL
PRODUCT

INVENTION
PRODUCT

(THE NUMBER OF
BALLS: 14)

(THE NUMBER OF
BALLS: 13)

# FIG. 4A

# FIG. 4B

## FIG. 5A

72

72a

1a

75

DIRECTION OF
VIBRATION MESUREMENT

1

## FIG. 5B

1a   75   DIRECTION OF
VIBRATION MESUREMENT

1

10

# FIG. 6A

POWER SPECTRUM

Overall:51.56dB(A)r

X:240.000Hz  Y:42.49dB(A)r

INVENTION PRODUCT (THE NUMBER OF BALLS: 13)

# FIG. 6B

POWER SPECTRUM

Overall:55.71dB(A)r

X:235.000Hz  Y:52.53dB(A)r

CONVENTIONAL PRODUCT (THE NUMBER OF BALLS: 14)

11

## FIG. 7A

POWER SPECTRUM

Overall:−22.14dBGr

VIBRATION LEVEL

Mag
dBGr

0

Y

−100

0     (FREQUENCY) ⟶     2kHz

X:240.000Hz   Y:−37.98dBGr

INVENTION PRODUCT (THE NUMBER OF BALLS: 13)

## FIG. 7B

POWER SPECTRUM

Overall:−21.38dBGr

VIBRATION LEVEL

10

Y

Mag
dBGr

−80

0     (FREQUENCY) ⟶     2kHz

X:235.000Hz   Y:−28.34dBGr

CONVENTIONAL PRODUCT (THE NUMBER OF BALLS: 14)

# FIG. 8

530

530a

530a

530b

DIRECTION OF
VIBRATION

530c

## Prior Art